# EUROPEAN PATENT APPLICATION

(11) **EP 4 550 202 A1**
(43) Date of publication of application: **07.05.2025**
(21) Application number: 23829785.7
(22) Date of filing: 19.05.2023
(51) Int. Cl.: G06F 30/27, G06F 119/02, G06F 3/04883, G06N 3/084, G06N 3/044, G06N 3/08, G06N 3/045

(54) **METHOD, SYSTEM AND APPARATUS FOR PREDICTING AGE RANGE OR GENDER OF USER, AND MEDIUM**

(30) Priority: 30.06.2022 CN 202210768050
(71) Applicant: Alipay (Hangzhou) Information Technology Co., Ltd., Hangzhou, Zhejiang 310000 (CN)
(72) Inventor: ZHANG, Changhao, Hangzhou, Zhejiang 310000 (CN); WANG, Weiqiang, Hangzhou, Zhejiang 310000 (CN)
(74) Representative: Winter, Brandl - Partnerschaft mbB
(86) International application number: PCT/CN2023/095212
(87) International publication number: WO 2024/001599

(57) **Abstract**

A method for predicting an age interval or a gender of a user is disclosed, including: receiving a gesture input of the user on a touch panel; generating gesture information based on the gesture input; and predicting at least one of the age interval and the gender of the user based on the gesture information by using a machine learning model. A system and an apparatus for predicting an age interval or a gender of a user, and a medium are further disclosed.

## Description

### TECHNICAL FIELD

This application relates to a user information prediction, and in particular, to a method, a system, and an apparatus for predicting an age interval or a gender of a user, and a medium.

### BACKGROUND

An age interval and a gender of a user are important user information. However, in many cases, the user may not provide age interval or gender information. In this case, the age interval or gender information of the user needs to be predicted.

A current model usually performs a prediction based on image, voice, or action information of the user. However, such a model may need to collect and process more user data (sometimes even by using an additional sensor module), thereby adversely affecting user privacy preserving, device costs and complexity, device processing capability, power consumption, etc.

Therefore, a solution in which the age interval and/or the gender of the user can be efficiently predicted at low costs is needed.

### SUMMARY

To overcome a disadvantage in the conventional technology, in one or more embodiments of this specification, gesture information of a user is used, to implement a solution for predicting an age interval or a gender of the user with a smaller data collection amount and without an additional sensor.

One or more embodiments of this specification achieve the above-mentioned objectives by using the following technical solutions.

In an aspect, a method for predicting an age interval or a gender of a user is provided, including: receiving a gesture input of the user on a touch panel of user equipment; generating gesture information based on the gesture input of the user, where the gesture information includes two or more of a gesture event type, a gesture location, gesture duration, average pressing pressure, an average pressing area, a gesture timestamp, and an associated service identifier; and predicting at least one of the age interval and the gender of the user based on the gesture information by using a machine learning model.

Preferably, the machine learning model predicts at least one of the age interval and the gender of the user based on one or more of a trace feature, a timing feature, and a category feature that are of the gesture input.

Preferably, the machine learning model includes a trace module, and the trace module is configured to generate a trace feature code of the gesture input based on the gesture event type, gesture start coordinates, and/or gesture end coordinates.

Preferably, the trace module is configured to: convert the gesture event type, the gesture start coordinates, and/or the gesture end coordinates into a trace image; and generate a trace feature code of the gesture input based on the trace image by using a CNN-based model.

Preferably, the machine learning model includes a timing module, and the timing module is configured to generate a timing feature code of the gesture input based on the gesture duration, the average pressing pressure, the average pressing area, and/or the gesture timestamp.

Preferably, the timing module is configured to: generate sampling information based on the gesture duration, the average pressing pressure, the average pressing area, and/or the gesture timestamp and based on a convolution algorithm; and input the sampling information into an attention mechanism, to generate the timing feature code of the gesture input.

Preferably, the machine learning model includes a category module, and the category module is configured to: perform word embedding on the associated service identifier of the gesture input, to generate a word embedding representation; generate one or more manual features based on the gesture information; concatenate the manual feature and the word embedding representation; and input a concatenated output to a wide neural network model, to generate the category feature code.

Preferably, the method further includes: concatenating feature codes of two or more of the trace feature, the timing feature, and the category feature, to generate a gesture feature code.

Preferably, the method further includes: predicting both the age interval and the gender of the user based on the gesture information by using a multi-gate mixture-of-experts module of the machine learning model.

Preferably, the method further includes: preliminarily obtaining the age interval of the user through division by using an XGBoost model.

Preferably, the method further includes: predicting at least one of the age interval and the gender of the user based on a combination of the gesture information of the user and one or more of posture information, action information, and voice information of the user.

Preferably, the method further includes: determining an identity authentication method for the user based on at least one of the predicted age interval and the predicted gender of the user.

Preferably, the method further includes: generating a recommendation for the user based on at least one of the predicted age interval and the predicted gender of the user.

According to another aspect, a system for predicting an age interval or a gender of a user is provided, including: a gesture input receiving module, configured to receive a gesture input of the user on a touch panel of user equipment; a gesture information generation module, configured to generate gesture information based on the gesture input of the user, where the gesture information includes two or more of a gesture event type, a gesture location, gesture duration, average pressing pressure, an average pressing area, a gesture timestamp, and an associated service identifier; and a prediction module, configured to predict at least one of the age interval and the gender of the user based on the gesture information by using a machine learning model.

Preferably, the machine learning model includes one or more of a trace module, a timing module, and a category module.

According to still another aspect, an apparatus for predicting an age interval or a gender of a user is provided, including: a memory; and a processor. The processor is configured to perform the above-mentioned method.

According to yet another aspect, a computer-readable storage medium storing instructions is provided. When the instructions are executed by a computer, the computer is enabled to perform the above-mentioned method.

Compared with the conventional technology, in one or more embodiments of this specification, one or more of the following technical effects can be achieved: There is no dependence on an additional sensor and/or collection of additional information; user privacy is better preserved; costs of the user equipment are lower; an application scope is wider; and/or occupation of a processor is reduced, system performance is improved, and power consumption is reduced.

### BRIEF DESCRIPTION OF DRAWINGS

FIG. 1A is a schematic diagram of an example of a data amount of a user according to an embodiment of this specification;
FIG. 1B shows a recall rate when a machine learning model preliminarily obtains an age interval of a user in FIG. 1A through division;
FIG. 2 shows an example of a data structure of gesture information according to an embodiment of this specification;
FIG. 3 is a block diagram of an architecture of a machine learning model for predicting an age interval and/or a gender of a user according to a preferred embodiment of this specification;
FIG. 4 is a schematic block diagram of an example structure of a trace module according to an embodiment of this specification;
FIG. 5 is a schematic diagram of an example of converting trace information into a trace image according to an embodiment of this specification;
FIG. 6 is a schematic block diagram of an example structure of a timing module according to an embodiment of this specification;
FIG. 7 is a schematic block diagram of an example structure of a category module according to an embodiment of this specification;
FIG. 8 is a schematic block diagram of an example structure of a classification module according to an embodiment of this specification;
FIG. 9 is a flowchart of an example method for predicting an age interval or a gender of a user according to an embodiment of this specification;
FIG. 10 is a schematic block diagram of an example system for predicting an age interval or a gender of a user according to an embodiment of this specification; and
FIG. 11 is a schematic block diagram of an apparatus for implementing a method according to one or more embodiments of this specification.

### DESCRIPTION OF EMBODIMENTS

Content of the following specific implementations is sufficient to enable any person skilled in the art to understand and implement technical content of one or more embodiments of this specification, and according to the specification, claims, and accompanying drawings disclosed in this specification, a person skilled in the art can easily understand related objectives and advantages of one or more embodiments of this specification.

An age interval and a gender of a user are important user information. However, in many cases, the user may not provide age interval or gender information. In this case, the age interval or gender information of the user needs to be predicted.

To predict age interval or the gender of the user, machine learning models are increasingly used in recent years. The machine learning model predicts the age interval or the gender of the user based on one or more types of data (for example, user data).

In a solution, the machine learning model can predict the age interval or the gender of the user based on posture data of the user.

For example, the posture data of the user can include hand action information, buttock action information, arm action information, wrist action information, and chest action information of the user during walking. It can be conceived that users of different age intervals (for example, the aged, the young, and the children) may have different postures, and users of different genders may also have different postures. Therefore, the machine learning model is trained based on posture data of a plurality of users, to obtain a machine learning model that predicts the age interval or the gender of the user based on the posture data.

However, the posture data of the user usually need to be collected by using a sensor such as an accelerometer and a gyroscope. Therefore, to collect the posture data of the user, not only the user equipment needs to have the sensor, but also the user needs to grant authorization to use the sensor to collect information. In addition, a processor processing capability is required, and power needs to be consumed, to collect data and process the collected data.

In another solution, the machine learning model can predict the age interval or the gender of the user based on voice data of the user.

The voice data of the user can include, for example, voice data of the user. The voice data are of a common data type that can be used to picture the user. In an example, the user can be led to say a specific statement, to improve prediction accuracy. In an alternative example, a prediction can be performed based on a randomly collected user voice. It can be understood that voices of users of different age intervals and different genders have respective features, and therefore, the age interval and/or the gender of the user can be predicted based on the voice data. A prediction can be performed by using various machine learning models such as a deep learning voice network.

Similarly, the voice data of the user usually need to be collected by using a dedicated element such as a microphone (for example, a built-in microphone in the user equipment such as a smartphone). Similarly, the user equipment needs to have a microphone, and the user needs to grant authorization to use the microphone to collect a voice. In addition, a processor processing capability is required, and power needs to be consumed, to collect data and process the collected data.

In still another solution, the machine learning model can predict the age interval or the gender of the user based on action data of the user.

The action data of the user can include, for example, various conceivable action data of an air write action, an eye movement, a shake movement, a free movement, etc. of the user. The action data of the user can be usually collected by using an image acquisition device (for example, a camera), and are different from the above-mentioned posture data collected by the accelerometer and the gyroscope. It can be understood that actions of the users of different age intervals and different genders have respective features (for example, in terms of an action frequency, an action amplitude, or an action habit). Therefore, the age interval and/or the gender of the user can be predicted based on the action data. A prediction can be performed by using various machine learning models such as various image processing models.

Similarly, the action data of the user usually need to be collected by using a dedicated element such as the image acquisition device (for example, the camera). Similarly, the user equipment needs to have an image acquisition device, and the user needs to grant authorization to use the device to capture a user image. In addition, a processor processing capability is required, and power needs to be consumed, to collect data and process the collected data.

It can be seen that in the above-mentioned descriptions, a dedicated sensor or a data collection element is usually needed to collect corresponding data, to adversely affecting device costs, user privacy, device performance, and power consumption.

To resolve the above-mentioned problem, the inventor creatively recognizes that users of different age intervals and genders may also have different gesture behavior habits. For example, an operating frequency of the aged is usually relatively slow. Pressing pressure of the children and the female is usually relatively small. The users of different age intervals and genders usually also tap different services.

Therefore, the embodiments of this specification provide a solution for predicting an age interval and/or a gender of a user based on gesture data. In this solution, not only an idea that can be used to predict the age interval and/or the gender of the user and that is not found in the conventional technology is put forward, but also the above-mentioned problem is resolved in comparison with an existing solution.

To predict the age interval of the user, the age interval can be first obtained through division. There are many manners of obtaining the age interval through division. For example, the following several solutions for obtaining age intervals through division can be used: Solution 1: six years old to 10 years old, 10 years old to 20 years old, 20 years old to 30 years old, 30 years old to 40 years old, 40 years old to 50 years old, 50 years old to 60 years old, and over 60 years old. Solution 2: six years old to 20 years old, 20 years old to 50 years old, and over 50 years old. Solution 3: six years old to 40 years old, 40 years old to 60 years old, over 60 years old; and so on.

It can be appreciated that different solutions for obtaining age intervals through division may also affect performance of the machine learning model when the age intervals are predicted. For example, if age ranges without a significant uniform feature are classified into one age interval, a prediction of the age interval may be adversely affected.

Usually, age intervals can be obtained through division based on experience. For example, a developer and/or a user of a prediction system can set the age interval of the user based on experience or historical data of the developer and/or the user of the prediction system. However, if the age intervals are obtained through division based on subjective experience, most proper age intervals may be unable to be obtained through division.

In a preferred example of this specification, the age interval of the user can be first obtained through division by using the machine learning model, so that prominent age ranges with a more uniform feature are classified into the same age interval, to improve system performance in a subsequent prediction process.

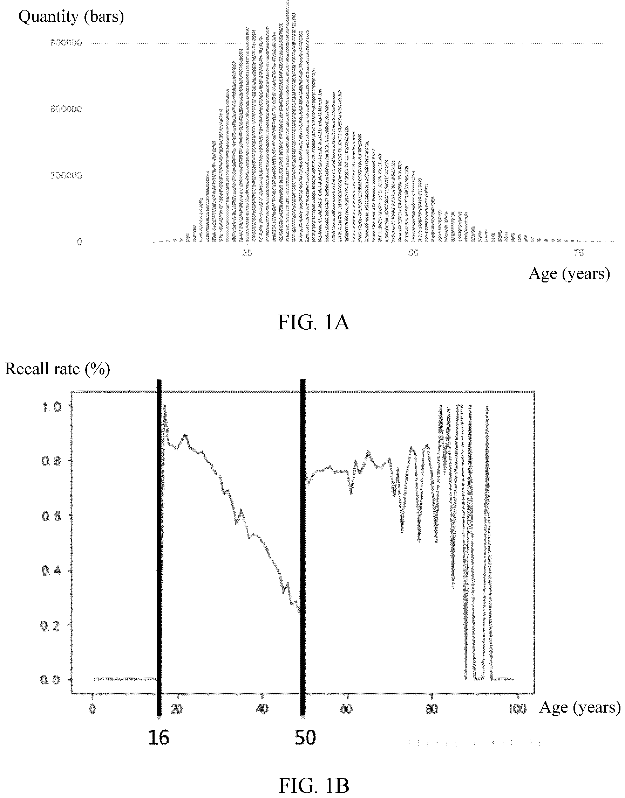

FIG. 1A is a schematic diagram of an example of a data amount of a user according to an embodiment of this specification. In FIG. 1A, a horizontal axis represents an age (calculated in years), and a vertical axis represents a data amount of a user at the age. The data amount is calculated by using a quantity of data points (a quantity of bars), and represents a quantity of bars of available data of the user. The data amount can be, for example, from a test dataset.

As shown in FIG. 1A, because of availability of data, a data amount of a user under 6 years old and a user over 65 years old is relatively small, and a data amount of a user in a middle range (especially 20 years old to 40 years old) is relatively large.

FIG. 1B shows a recall rate when a machine learning model preliminarily obtains an age interval of a user in FIG. 1A through division. In FIG. 1B, a horizontal axis represents an age (calculated in years), and a vertical axis represents a recall rate of an age interval predicted by using the machine learning model.

The machine learning model can be, for example, any known machine learning model, for example, an XGBoost model. The recall rate is a recall rate when it is assumed that age intervals are 6 years old to 16 years old (the teenagers), 17 years old to 50 years old (the adults), and 51 years old to 100 years old (the aged) that are obtained through division.

As shown in FIG. 1B, a recall rate of 16 years old is very high, and a recall rate of 50 years old is very low. It can be seen that users of different age intervals have clear differences. Based on the above-mentioned result, it is relatively proper to obtain age intervals of training data through division into 6 years old to 16 years old (the teenagers), 17 years old to 50 years old (the adults), and 51 years old to 100 years old (the aged). The age intervals are preliminarily obtained through division based on performance of recall rates, to improve system performance when the age intervals are subsequently predicted.

As described above, in the embodiments of this specification, a machine learning model that predicts at least one of an age interval or a gender of a user based on gesture information is proposed. The gesture information can be generated based on a gesture input of the user on a touch panel of user equipment.

The user equipment can be any computing device with a touch panel, and includes but is not limited to a smartphone, a tablet computer, a notebook computer, a stationary computer, an embedded computer, or various types of internet of things (IoT) devices. The touch panel can receive a touch input of the user, and convert the touch input of the user into information such as a coordinate point.

The touch panel can be a touchscreen, namely, a device that has both a touch function and a display function. Alternatively, the touch panel does not need to have the display function. The following provides descriptions by using the touchscreen as an example.

Examples of the gesture input can include but are not limited to a touch gesture, a tap gesture, a page turn gesture, a swipe gesture, a sweep gesture, or a key gesture.

Based on a quantity of input points, the gesture input can include a single-point gesture input and a multi-point gesture input (for example, a multi-point touch input or a multi-point slide input). The gesture input used in the embodiments of this specification can be a single-point gesture input. In some cases, the gesture input used in the embodiments of this specification can further include a multi-point gesture input.

Based on an event type, the gesture input can include a tap input and a slide input. The tap input is usually only related to a static coordinate point (which can be a plurality of static coordinate points in a case of a multi-point input). The slide input can be related to dynamic coordinate points, the dynamic coordinate points constitute an action path of the input gesture, and the path usually has a start and an end.

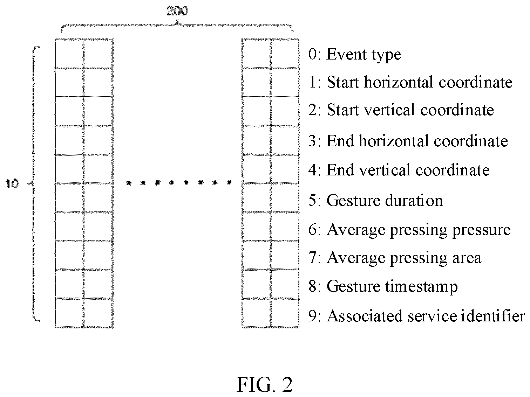

FIG. 2 shows an example of a data structure of gesture information according to an embodiment of this specification.

As shown in FIG. 2, in an example in this specification, the gesture information can include one or more of an event type, start coordinates (which can be represented by a start horizontal coordinate and a start vertical coordinate), end coordinates (which can be represented by an end horizontal coordinate and an end vertical coordinate), gesture duration, average pressing pressure, an average pressing area, a gesture timestamp, an associated service identifier (for example, indexes 0 to 9 in FIG. 2), etc. The gesture information can further include information derived from the above-mentioned information. The gesture information can further include any other information that is associated with a gesture on a touchscreen of user equipment and that can be conceived by a person skilled in the art.

As described above, the event type can indicate a type of an event, for example, a tap event and a slide event.

For an event of a slide type, the start coordinates are coordinates of a start of a slide path. For an event of a tap type, the start coordinates are coordinates of a tapped point.

For the event of the slide type, the end coordinates are coordinates of an end of the slide path. For the event of the tap type, the end coordinates do not need to be included (a corresponding value can be set to null), or the end coordinates can be the same as the start coordinates.

The gesture duration can be duration from a moment at which a finger starts to touch the touchscreen to a moment at which the finger leaves the touchscreen.

The average pressing pressure can be an average value of pressing pressure of the finger on the touchscreen during the gesture duration.

The average pressing area can be an average value of contact areas between the finger and the touchscreen during the gesture duration.

The gesture timestamp can be a timestamp when the finger touches the touchscreen.

The associated service identifier can indicate a service when a user interacts with the touchscreen by using a gesture input. For example, the associated service identifier can be an identifier of a service displayed on the touchscreen when a gesture just touches the touchscreen or during the gesture duration. For an application, the identifier can be an application ID (for example, an app ID). For a page (for example, an intra-application page or a web page), the identifier can be a page ID, a page URI, etc.

In a preferred example, the gesture information can be of a data structure shown in FIG. 2. The data structure can be an MxN matrix. Here, M is a feature quantity, and N is a data point quantity. For example, M can be 10 (that is, the above-mentioned 10 features of the gesture information, as shown by the indexes 0 to 9), and N can be 200, that is, 200 times of interaction (for example, 200 times of recent interaction) between the user and the touchscreen. It can be understood that more or fewer features can be selected based on a specific case. In addition, more or less data points can be used in each matrix.

Any other data structure that can be conceived by a person skilled in the art can also be used.

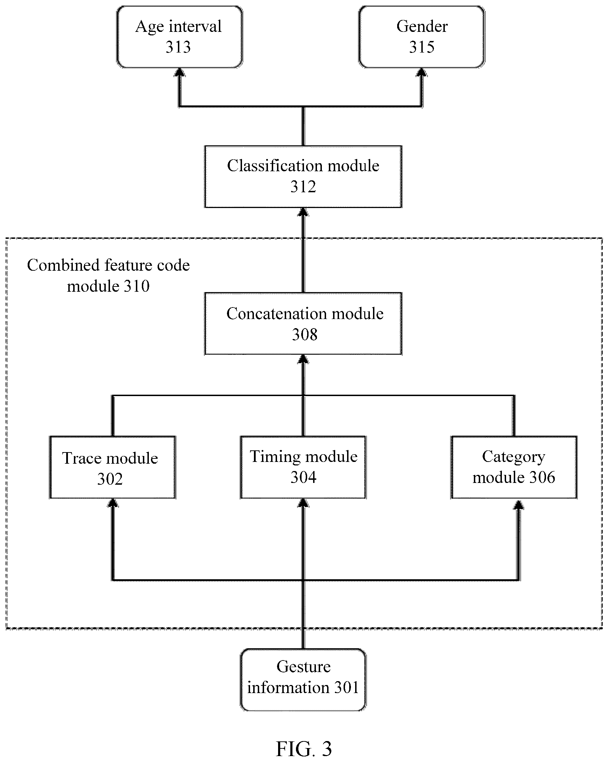

FIG. 3 is a block diagram of an architecture of a machine learning model for predicting an age interval and/or a gender of a user according to a preferred embodiment of this specification.

As shown in FIG. 3, in the preferred embodiment, the machine learning model can include a module (may be briefly referred to as a "gesture feature module") for encoding one or more types of gesture features, for example, one or more of a trace module 302, a timing module 304, and a category module 306. The trace module 302, the timing module 304, and the category module 306 can receive gesture information 301, and respectively generate a trace feature, a timing feature, and a feature code of a category feature based on the gesture information.

It should be appreciated that although all the three modules are described in this specification and shown in the accompanying drawings, it should be appreciated that a prediction of the age interval/gender in this embodiment of this specification can be implemented by using only one or any two of these modules.

When there are a plurality of gesture feature modules, the machine learning model can include a concatenation module 308. Feature codes output by the plurality of gesture feature modules can be concatenated by the concatenation module 308, to form a combined gesture feature code. The combined gesture feature code can be used to predict one or two of the age interval and the gender. One or more of the trace module 302, the timing module 304, and the category module 306 and the concatenation module 308 jointly constitute a combined feature code module 310, configured to: generate the combined gesture feature code based on the gesture information, and output the combined gesture feature code to a classification module 312.

When there is only one gesture feature module (that is, there is only one of the trace module 302, the timing module 304, and the category module 306), the machine learning model does not need to include the concatenation module 308. In this case, an output of the gesture feature module is a gesture feature code input to the classification module 312.

The generated gesture feature code is input to the classification module 312, to generate a prediction of at least one of an age interval 313 and a gender 315 of the user based on the gesture feature code.

When both the age interval and the gender are predicted, the classification module 312 can be a multi-task classification module. When only one of the age interval and the gender is predicted, the classification module 312 can be a single-task classification module.

The following describes, one by one, modules shown in FIG. 2.

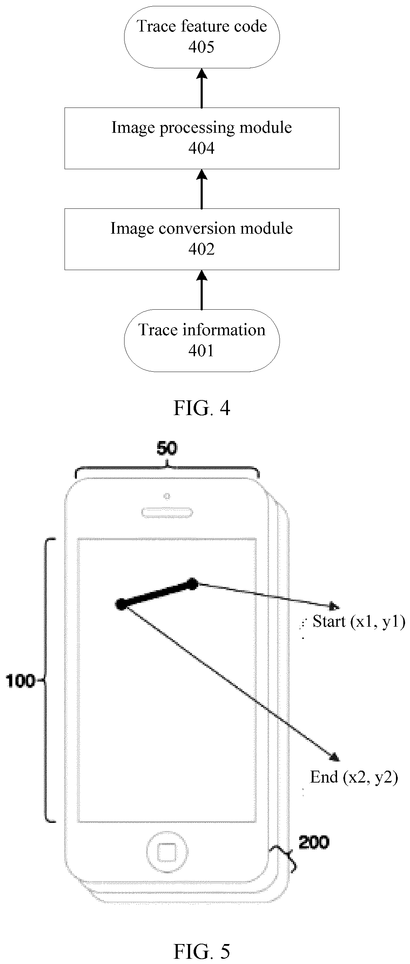

FIG. 4 is a schematic block diagram of an example structure of a trace module according to an embodiment of this specification.

As shown in FIG. 4, the trace module can receive information related to a trace of a gesture, that is, trace information 401 of the gesture. The trace information can include, for example, a gesture event type, gesture start coordinates (including a horizontal coordinate and a vertical coordinate), and/or gesture end coordinates (including a horizontal coordinate and a vertical coordinate), and does not need to include the gesture end coordinates for an event of a tap type. It can be understood that the trace information can include more or less information.

In an example, features 0 to 4 in a data structure shown in FIG. 3 can be used, to form a 200x5 trace information matrix.

The trace module can include an image conversion module 402 and an image processing module 404.

In this embodiment of this specification, the image conversion module 402 converts the trace information into a trace image, to perform processing. Specifically, a touch panel can be converted into a canvas of a specified size, for example, 100x50. Then, the trace information can be converted into the trace image on the canvas.

FIG. 5 is a schematic diagram of an example of converting trace information into a trace image according to an embodiment of this specification.

For example, as shown in FIG. 5, for an event of a slide type, the trace image can be a curve segment on the canvas, for example, a straight segment from a start (x1, y1) to an end (x2, y2). For example, on the canvas representing the touch panel, 1 can be assigned to a point on the curve segment, and 0 can be assigned to a point not on the curve segment, to obtain a 100x50 matrix. Therefore, the original 200x5 trace information matrix can be converted into a 200x100x50 trace image matrix.

For an event of a tap type, the trace image can be a point (not shown in FIG. 5) on the canvas. In this case, 1 may be assigned to only one element (that is, a point corresponding to start coordinates) in the 100x50 matrix, and 0 may be assigned to the other elements in the 100x50 matrix.

Then, the trace image matrix can be input to the image processing module 404 for processing. The image processing module can be a convolutional neural network (CNN) model, or any other CNN-based model. Any other image processing model that can be conceived by a person skilled in the art can also be used.

A code of a trace feature of a gesture input, namely, a trace feature code, can be generated by using the image processing model.

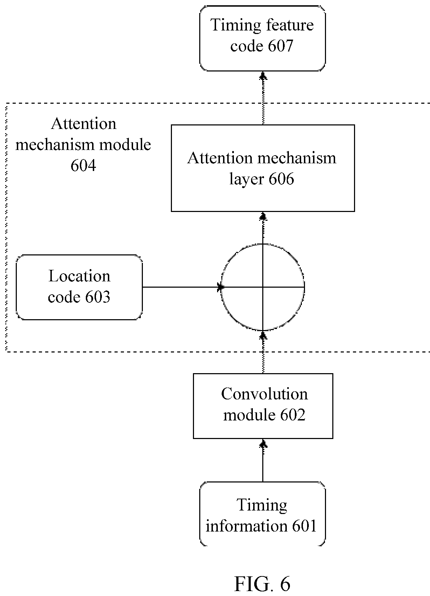

FIG. 6 is a schematic block diagram of an example structure of a timing module according to an embodiment of this specification.

As shown in FIG. 6, the timing module can receive information related to a timing or a time of a gesture, that is, timing information of the gesture. The timing information can include, for example, gesture duration, average pressing pressure, an average pressing area, and a timestamp. It can be understood that the timing information can include more or less information.

In an example, features with indexes 5 to 8 in a data structure shown in FIG. 4 can be used, to form a 200x4 timing information matrix.

As shown in FIG. 6, the timing module can include a convolution module 602 and an attention mechanism module 604. The convolution module 602 can execute a convolution algorithm based on the timing information, to generate sampling information. For example, a 200x64 sampling information matrix can be obtained based on the 200x4 timing information matrix by using the convolution module.

The convolution module 602 can perform convolution on a matrix of timing information 601. The timing information matrix can be processed by using a convolutional neural network with a 1x1 convolutional kernel. Convolution can alternatively be performed by using another convolutional kernel. The sampling information can be generated through convolution.

The attention mechanism module 604 can generate processing for the sampling information, to generate a timing feature code of the gesture information.

As shown in FIG. 6, the attention mechanism module 604 can perform processing based on the sampling information and a corresponding location code 603 by using a plurality of attention mechanism layers 606, and each attention mechanism layer 606 can include, for example, a single-head or multi-head attention mechanism unit, a summation and normalization unit, and a feedforward network. For a specific implementation of the attention mechanism module 604 (including the location code 603), references can be made to a transformer model or a variant of the transformer model, for example, references can be made to a paper "Attention is all you need" published by Ashish Vaswani et al. in 2017 (references can be made to https://arxiv.org/abs/1706.03762).

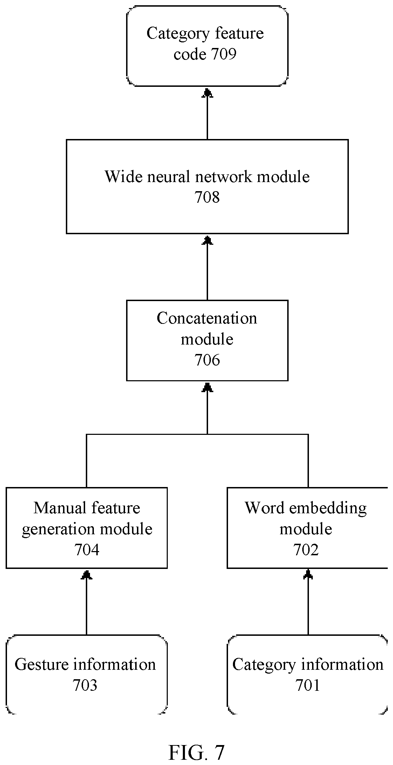

FIG. 7 is a schematic block diagram of an example structure of a category module according to an embodiment of this specification.

As shown in FIG. 7, the category module can receive information related to a category of a gesture, that is, category information 701 of the gesture. In this embodiment of this specification, the category information is an associated service identifier, for example, an app ID of a gesture input. The category information can include more or less information. It can be assumed that patterns of gesture behaviors of users of different age intervals and/or different genders in different services may be different. Therefore, the category information such as the service identifier is added, to help identify an age interval and/or a gender of the user.

In an example, a feature with an index 9 in a data structure shown in FIG. 4 can be used, to form a 200x1 timing information matrix.

In addition, the category module can include a word embedding module 702, and the word embedding module can generate a word embedding representation of the category information (for example, the associated service identifier). Because the category information such as the service identifier may have no clear meaning, the word embedding representation of the category information can be generated based on a simple word embedding algorithm.

The category module can further include a manual feature generation module 704. The manual feature generation module can generate a specified manual feature based on gesture information 703. The gesture information is, for example, manual information shown in FIG. 2.

Examples of the manual feature can include but are not limited to a gesture slide speed, pressing pressure, and a gesture input frequency.

The gesture slide speed can be obtained by dividing a slide distance (for example, a straight line distance from a start of a gesture to an end of the gesture) by gesture duration. For an event of a tap type, a gesture slide speed does not need to be calculated.

The pressing pressure can be obtained by dividing pressing pressure of the gesture by a pressing area.

The gesture input frequency can be obtained by counting a gesture operation within a unit time.

In specific applications, a statistical value can be calculated for each manual feature, and is used as an actually used manual feature. For example, a maximum value, a minimum value, a median value, an average value, a variance, etc. of each manual feature can be calculated.

Any other manual feature that can be conceived by a person skilled in the art can be used.

As shown in FIG. 7, the category module can further include a concatenation module 706 and a wide neural network module 708. The concatenation module 706 can generate a concatenated category feature representation based on the manual feature and the word embedding representation of the associated service identifier.

Subsequently, the concatenated category feature representation is input to the wide neural network module 708, to generate a category feature code 709. The wide neural network module 708 can include a fully connected layer. The inventor finds that a wide neural network performs well for the category feature. A specific implementation of the wide neural network is omitted here for simplicity.

As described above, as shown in FIG. 3, a trace feature code generated by the trace module 302, a timing feature code generated by the timing module 304, and a category feature code generated by the category module 306 can be concatenated by the concatenation module 308, to generate the concatenated code and use the concatenated code as a final gesture feature code.

It should be understood that although all the three modules are shown in FIG. 3, the machine learning model can include any one module or any two modules. When only two modules are included, the concatenation module can concatenate only feature codes from the two modules. When only one module is included, the concatenation module does not need to be included.

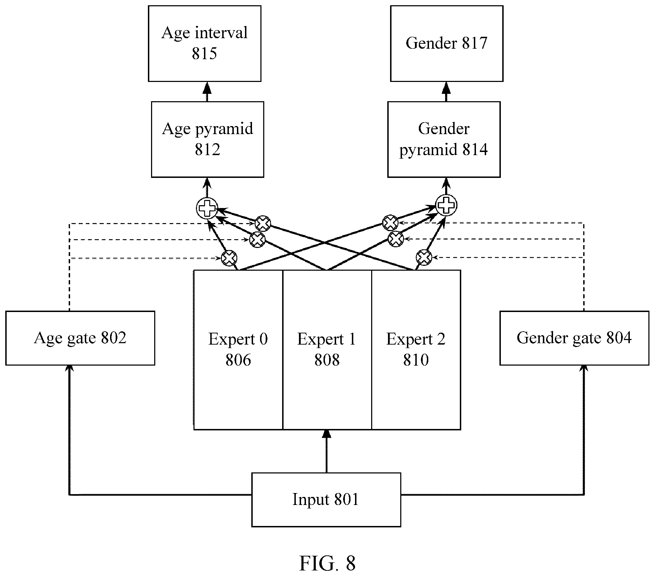

FIG. 8 is a schematic block diagram of an example structure of a classification module according to an embodiment of this specification.

As described above, when both the age interval and the gender are predicted, the classification module can be a multi-task classification module. When only one of the age interval and the gender is predicted, the classification module can be a single-task classification module.

When the classification module is a multi-task classification module, the multi-task classification module can be a multi-gate mixture-of-experts (MMoE) module.

Because there is also an association between the age interval and the gender in terms of the gesture (for example, a feature difference between an adult male and a teenager female is clearer), the MMoE model can further improve prediction performance of each task based on the association.

As shown in FIG. 8, the above-mentioned generated gesture feature code can be used as an input 801, and is input to the MMoE model. The MMoE model can include an age gate 802, a gender gate 804, and a mixture-of-experts network including a plurality of experts (for example, an expert 0 806, an expert 1 808, and an expert 2 810, where the plurality of experts are not limited thereto in this application), and outputs are summarized in a weighted manner and input to an age pyramid 812 and a gender pyramid 814, to separately generate predictions of an age interval 815 and a gender 817. For more details of the MoME model, references can be made to a paper "Modeling Task Relationships in Multi-task Learning with Multi-gate Mixture-of-Experts" published by Jiaqi Ma et al. in 2018 (for example, references can be made to https://dl.acm.org/doi/10.1145/3219819.3220007).

Alternatively, any other used multi-task classification model that can be conceived by a person skilled in the art can be used.

When the classification module is a single-task classification module, any proper single-task classification module that can be conceived by a person skilled in the art can be used.

Each constituent module of the machine learning model that predicts the age or the gender of the user based on the gesture information of the user is described in detail above. The following describes an example method and system for predicting an age and/or a gender of a user by using a machine learning model. It should be appreciated that in the following method and system, some implementation details are omitted. For descriptions of these implementation details, references can be made to the above-mentioned descriptions.

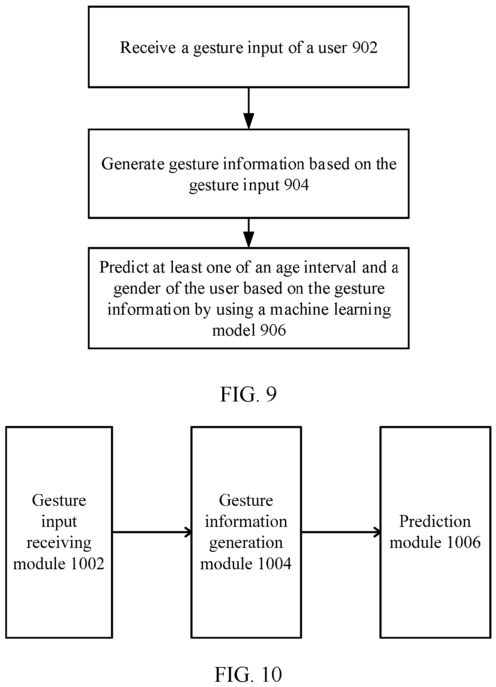

FIG. 9 is a flowchart of an example method for predicting an age interval or a gender of a user according to an embodiment of this specification. One or more steps of the example method can be implemented, for example, by the machine learning model described above with reference to FIG. 3.

The method can include: Operation 902: Receive a gesture input of the user on a touch panel of user equipment.

For example, when the machine learning model is implemented on the user equipment, the user input on the touch panel from the user can be directly received. When the machine learning model is implemented on a server, a user input of the user on an application and/or a page can be received. Alternatively, the server can receive a history that is of the gesture input and that is stored in the user equipment.

It should be noted that, different from posture information (an accelerometer or a gyroscope is needed), voice information (a microphone is needed), and action information (a camera is needed) that are described above, not only an additional sensor or a dedicated data collection device needs to be used for the above-mentioned information, but also the above-mentioned information is independent of a use process of the user. In other words, the user may not need to provide the information for a normal use service originally. For example, for an online shopping application, data of the accelerometer, the gyroscope, the microphone, or the camera are not necessary for an online shopping behavior of the user. However, in most cases, especially in a currently popular smart device with a touchscreen, the user needs to perform a gesture input (namely, a touch input) on the touchscreen, to use a corresponding service, for example, tap and slide to browse, select, and buy an article in the online shopping application.

Therefore, this embodiment of this specification provides another idea of predicting the age interval and/or the gender of the user. In addition, compared with a solution in which the posture information, the voice information, and the action information are used, the solution based on the gesture information in this embodiment of this specification does not depend on an additional sensor and/or collection of additional information.

In addition, because there is no dependence on the additional sensor and/or collection of the additional information, less user data needs to be collected, to preserve user privacy; no additional sensor is needed, so that costs of the user equipment are lower; no additional sensor is needed, so that this embodiment of this specification has a wider application scope, for example, can be applied to some internet of things devices with only a touchscreen; and no additional information needs to be collected and processed, to reduce occupation of a processor, improve system performance, and reduce power consumption.

In a preferred embodiment, the user can be notified that gesture information of the user is to be used to predict the age interval and/or the gender of the user. In a more preferred embodiment, definite authorization of the user can be requested before the gesture information of the user is used.

The method can further include: Operation 904: Generate gesture information based on the gesture input of the user, where the gesture information includes two or more of a gesture event type, a gesture location, gesture duration, average pressing pressure, an average pressing area, a gesture timestamp, and an associated service identifier. As described above, the gesture event type and the gesture location (including start coordinates and end coordinates of a gesture path) can be used as trace features of the gesture input, the gesture duration, the average pressing pressure, the average pressing area, and the gesture timestamp can be used as a timing features of the gesture input, and the associated service identifier can be used as a category feature of the gesture input.

The method can further include: Operation 906: Predict at least one of the age interval and the gender of the user based on the gesture information by using the machine learning model.

As described above, the machine learning model predicts the age interval of the user based on one or more of the trace feature, the timing feature, and the category feature that are of the gesture input. The machine learning model predicts the age interval or the gender of the user based on a combination of three of the trace feature, the timing feature, and the category feature that are of the gesture input.

The machine learning model can include a trace module, and the trace module is configured to generate a trace feature code of the gesture input based on the gesture event type, gesture start coordinates, and/or gesture end coordinates. Specifically, the trace module can be configured to: convert the gesture event type, the gesture start coordinates, and/or the gesture end coordinates into a trace image; and generate a trace feature code of the gesture input based on the trace image by using a CNN-based model. For more details of the trace module, references can be made to the above-mentioned descriptions in FIG. 4 and FIG. 5.

The machine learning model can include a timing module, and the timing module is configured to generate a timing feature code of the gesture input based on the gesture duration, the average pressing pressure, the average pressing area, and/or the gesture timestamp. Specifically, the timing module can be configured to: generate sampling information based on the gesture duration, the average pressing pressure, the average pressing area, and/or the gesture timestamp and based on a convolution algorithm; and input the sampling information into an attention mechanism, to generate the timing feature code of the gesture input. For more details of the timing module, references can be made to the above-mentioned descriptions in FIG. 6.

The machine learning model can include a category module, and the category module is configured to: perform word embedding on the associated service identifier of the gesture input, to generate a word embedding representation; generate one or more manual features based on the gesture information; concatenate the manual feature and the word embedding representation; and input a concatenated output to a wide neural network model, to generate the category feature code. For more details of the category module, references can be made to the above-mentioned descriptions in FIG. 7.

The machine learning model can further include a concatenation module, and the concatenation module is configured to concatenate feature codes of two or more of the trace feature, the timing feature, and the category feature, to generate a gesture feature code. When only one feature is used, concatenation does not need to be performed, and the machine learning model does not need to include the concatenation module.

The machine learning model can further include a multi-gate mixture-of-experts module, configured to predict both the age interval and the gender of the user based on the gesture information by using a multi-gate mixture-of-experts module of the machine learning model. In an alternative embodiment, another multi-task classification module can be used to predict both the age interval and the gender. When only one of the age interval and the gender is predicted, a single-task classification module can be used to perform a prediction.

Before the age interval is predicted, the age interval of the user can be preliminarily obtained through division by using an XGBoost model. The age interval is preliminarily obtained through division, to predict the age interval more accurately.

At least one of the age interval and the gender of the user can be further predicted based on a combination of the gesture information of the user and one or more of posture information, action information, and voice information of the user. The gesture information described in this embodiment of this specification can be combined with the posture information, the action information, and the voice information that are mentioned above, to predict the age interval or the gender based on more types of information, thereby further improving prediction accuracy.

The method can further include: After the age interval and the gender of the user are predicted, an identity authentication method for the user can be determined based on at least one of the predicted age interval and the predicted gender of the user; or identity authentication can be performed on the user (not shown in FIG. 9),

For example, some teenage users may not have an identity card or have sufficient knowledge to complete identity authentication. In this case, a prompt or a guide can be specifically provided to a teenager. For example, the teenager user can be prompted that a physical identity card is not needed, and an identity card number can be found on a hukou page. For another example, the teenager can be prompted to request a parent to assist in or guarantee execution of identity authentication, etc.

For another example, some aged users may have poor vision. Therefore, when the aged user is recognized, a displayed font and icon can be enlarged, and face scanning duration for authentication can be prolonged.

The method can further include: after the age interval or gender of the user is predicted, generating a recommendation for the user based on at least one of the predicted age interval and the predicted gender of the user.

For example, a product or a service that is more likely to be of interest to the teenager can be recommended to the teenager user; and a product or a service that is more likely to be of interest to the female can be recommended to a female user. The recommendation can be provided based on the age interval, the gender, or a combination of the age interval and the gender in any proper method that can be conceived by a person skilled in the art.

FIG. 10 is a schematic block diagram of an example system for predicting an age interval or a gender of a user according to an embodiment of this specification. For specific descriptions of modules of the system, references can be made to the above-mentioned method described in FIG. 9 and specific details of the above-mentioned machine learning model and the modules of the machine learning model described in FIG. 2 to FIG. 8.

As shown in FIG. 10, the system can include a gesture input receiving module 1002, configured to receive a gesture input of the user on a touch panel of user equipment. For specific details of the operation of the module, references can be made to the above-mentioned descriptions of operation 902.

The system can further include a gesture information generation module 1004, configured to generate gesture information based on the gesture input of the user. The gesture information includes two or more of a gesture event type, a gesture location, gesture duration, average pressing pressure, an average pressing area, a gesture timestamp, and an associated service identifier. The gesture event type and the gesture location (including start coordinates and end coordinates of a gesture path) can be used as trace features of the gesture input, the gesture duration, the average pressing pressure, the average pressing area, and the gesture timestamp can be used as a timing features of the gesture input, and the associated service identifier can be used as a category feature of the gesture input. For details of the operation of the module, references can be made to the above-mentioned descriptions of operation 904.

The system can further include a prediction module 1006, configured to predict at least one of the age interval and the gender of the user based on the gesture information by using a machine learning model. For specific details of the operation of the module, references can be made to the above-mentioned descriptions of operation 906. As described above, the machine learning model predicts the age interval of the user based on one or more of the trace feature, the timing feature, and the category feature that are of the gesture input. The machine learning model can predict the age interval or the gender of the user based on a combination of three of the trace feature, the timing feature, and the category feature that are of the gesture input.

The machine learning model can include a trace module, and the trace module is configured to generate a trace feature code of the gesture input based on the gesture event type, gesture start coordinates, and/or gesture end coordinates. Specifically, the trace module can be configured to: convert the gesture event type, the gesture start coordinates, and/or the gesture end coordinates into a trace image; and generate a trace feature code of the gesture input based on the trace image by using a CNN-based model. For more details of the trace module, references can be made to the above-mentioned descriptions in FIG. 4 and FIG. 5.

The machine learning model can include a timing module, and the timing module is configured to generate a timing feature code of the gesture input based on the gesture duration, the average pressing pressure, the average pressing area, and/or the gesture timestamp. Specifically, the timing module can be configured to: generate sampling information based on the gesture duration, the average pressing pressure, the average pressing area, and/or the gesture timestamp and based on a convolution algorithm; and input the sampling information into an attention mechanism, to generate the timing feature code of the gesture input. For more details of the timing module, references can be made to the above-mentioned descriptions in FIG. 6.

The machine learning model can include a category module, and the category module is configured to: perform word embedding on the associated service identifier of the gesture input, to generate a word embedding representation; generate one or more manual features based on the gesture information; concatenate the manual feature and the word embedding representation; and input a concatenated output to a wide neural network model, to generate the category feature code. For more details of the category module, references can be made to the above-mentioned descriptions in FIG. 7.

The machine learning model can further include a concatenation module, and the concatenation module is configured to concatenate feature codes of two or more of the trace feature, the timing feature, and the category feature, to generate a gesture feature code. When only one feature is used, concatenation does not need to be performed, and the machine learning model does not need to include the concatenation module.

The machine learning model can further include a multi-gate mixture-of-experts module, configured to predict both the age interval and the gender of the user based on the gesture information by using a multi-gate mixture-of-experts module of the machine learning model. In an alternative embodiment, another multi-task classification module can be used to predict both the age interval and the gender. When only one of the age interval and the gender is predicted, a single-task classification module can be used to perform a prediction.

The system can further include an age interval division module (not shown in FIG. 10). For example, before the age interval is predicted, the age interval division module can preliminarily obtain the age interval of the user through division by using an XGBoost model. The age interval is preliminarily obtained through division, to predict the age interval more accurately.

At least one of the age interval and the gender of the user can be further predicted based on a combination of the gesture information of the user and one or more of posture information, action information, and voice information of the user.

The system can further include a user authentication module (not shown in FIG. 10), configured to: determine an identity authentication method for the user based on at least one of the predicted age interval and the predicted gender of the user, and/or perform authentication on the user. For specific details of the operation of the user authentication module, references can be made to the above-mentioned descriptions in FIG. 9.

The system can further include a recommendation module (not shown in FIG. 10), configured to generate a recommendation for the user based on at least one of the predicted age interval and the predicted gender of the user. For specific details of the operation of the recommendation module, references can be made to the above-mentioned descriptions in FIG. 9.

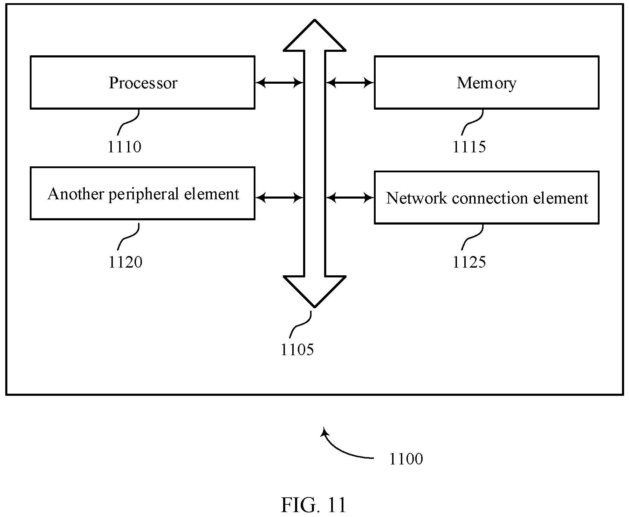

FIG. 11 is a schematic block diagram of an apparatus 1100 for implementing a method according to one or more embodiments of this specification. The apparatus can be configured to implement, for example, any of the method and the system described in this specification. The apparatus can be further implemented as any computing device or resource allocation device described in this specification. The apparatus can include a processor 1110 and a memory 1115, and the processor is configured to perform any method described above. The memory can store, for example, gesture information. The memory can be further configured to store any instruction, variable, intermediate data, etc. that can be used in an execution process of the method.

The apparatus 1100 can include a network connection element 1125, for example, can include a network connection device connected to another device through a wired connection or a wireless connection. The wireless connection can be, for example, a Wi-Fi connection, a Bluetooth connection, or a 3G/4G/5G network connection. For example, the apparatus 1100 can be connected to a network by using the network connection element, to obtain data (for example, a user interaction history) and various other data. The apparatus 1100 can further receive an input of the user from another device through the network connection element or transmit data to another device for display.

When an apparatus for implementing a machine learning model is implemented on user equipment, the apparatus further includes a touch panel, configured to receive a gesture input of the user. The apparatus can further include another peripheral element 1120, for example, an input apparatus (a keyboard or a mouse) or an output apparatus (for example, a display). The apparatus can include a touchscreen. For example, the user can input a weight of each target by using the input apparatus. Corresponding information such as a resource allocation result can also be output to the user through the output apparatus.

Each of these modules can communicate with one another directly or indirectly, for example, through one or more buses (for example, a bus 1105).

The apparatus can be a physical computing device or virtual computing device with a computing capability. Examples of the physical computing device can include but are not limited to a mainframe computer, a minicomputer, or a personal computer. Examples of the virtual computing device can include various types of virtual machines (for example, a vmware virtual machine or a virtualbox virtual machine) or virtual containers (for example, a virtual container such as docker).

It should be understood that, although the apparatus 1100 shown above is a single computing device, it should be understood that the apparatus 1100 can be actually a set of computing devices such as a computing device cluster, a virtual machine cluster, a computing cloud, and a storage cloud.

This application further discloses a computer-readable storage medium that includes computer-executable instructions stored in the computer-readable storage medium. When the computer-executable instructions are executed by a processor, the processor is enabled to perform the method in the embodiments described in this specification.

In addition, this application further discloses an apparatus. The apparatus includes a processor and a memory that stores computer-executable instructions. When the computer-executable instructions are executed by a processor, the processor is enabled to perform the method in the embodiments described in this specification.

This application further discloses a system. The system includes an apparatus for implementing the method in the embodiments described in this specification.

The method according to one or more embodiments of this specification can be implemented by software, firmware, or a combination thereof.

The embodiments of this specification are described in a progressive way. For same or similar parts in the embodiments, references can be made to each other. Each embodiment focuses on a difference from another embodiment. Particularly, some apparatus and system embodiments are briefly described because they are basically similar to some method embodiments. For related parts, references can be made to related descriptions in some method embodiments.

Some specific embodiments of this specification are described above. Other embodiments fall within the scope of the appended claims. In some cases, actions or steps described in the claims can be performed in a sequence different from that in the embodiments and desired results can still be achieved. In addition, the process depicted in the accompanying drawings does not necessarily need a particular sequence to achieve the desired results. In some implementations, multi-tasking and parallel processing are feasible or may be advantageous.

The element described in a singular form in this specification or only one element displayed in the accompanying drawings does not mean that a quantity of elements is limited to one. In addition, separate modules or elements described or shown in this specification can be combined into a single module or element, and a single module or element described or shown in this specification can be split into a plurality of modules or elements.

It should be further understood that the terms and expressions used in this specification are merely used for description, and one or more embodiments of this specification are not limited to these terms and expressions. Use of these terms and expressions does not indicate to rule out an equivalent feature of any illustration and descriptions (or partial illustration and descriptions), and it should be recognized that various modifications that may exist also need to be included within the scope of the claims. Other modifications, changes, and replacements may also exist. Correspondingly, the claims shall be deemed to cover all these equivalents.

Similarly, it should be noted that, although the above-mentioned descriptions are provided with reference to current specific embodiments, a person of ordinary skill in the art should recognize that the above-mentioned embodiments are merely intended to describe one or more embodiments of this specification, and can make various equivalent changes or substitutions without departing from the spirit of this application. Therefore, all changes and variations made to the above-mentioned embodiments within the scope of the substantive spirit of the present invention fall within the scope of the claims of this application.

## Claims

1. A method for predicting an age interval or a gender of a user, comprising:
receiving a gesture input of the user on a touch panel of user equipment;
generating gesture information based on the gesture input of the user, wherein the gesture information comprises two or more of a gesture event type, a gesture location, gesture duration, average pressing pressure, an average pressing area, a gesture timestamp, and an associated service identifier; and
predicting at least one of the age interval and the gender of the user based on the gesture information by using a machine learning model.

2. The method according to claim **1,** wherein the machine learning model predicts at least one of the age interval and the gender of the user based on one or more of a trace feature, a timing feature, and a category feature that are of the gesture input.

3. The method according to claim 2, wherein the machine learning model comprises a trace module, and the trace module is configured to generate a trace feature code of the gesture input based on the gesture event type, gesture start coordinates, and/or gesture end coordinates.

4. The method according to claim 3, wherein the trace module is configured to:
convert the gesture event type, the gesture start coordinates, and/or the gesture end coordinates into a trace image; and
generate a trace feature code of the gesture input based on the trace image by using a CNN-based model.

5. The method according to claim 2, wherein the machine learning model comprises a timing module, and the timing module is configured to generate a timing feature code of the gesture input based on the gesture duration, the average pressing pressure, the average pressing area, and/or the gesture timestamp.

6. The method according to claim 5, wherein the timing module is configured to:
generate sampling information based on the gesture duration, the average pressing pressure, the average pressing area, and/or the gesture timestamp and based on a convolution algorithm; and
input the sampling information into an attention mechanism, to generate the timing feature code of the gesture input.

7. The method according to claim 2, wherein the machine learning model comprises a category module, and the category module is configured to:
perform word embedding on the associated service identifier of the gesture input, to generate a word embedding representation;
generate one or more manual features based on the gesture information;
concatenate the manual feature and the word embedding representation; and
input a concatenated output to a wide neural network model, to generate the category feature code.

8. The method according to claim 2, further comprising:
concatenating feature codes of two or more of the trace feature, the timing feature, and the category feature, to generate a gesture feature code.

9. The method according to claim 1, further comprising:
predicting both the age interval and the gender of the user based on the gesture information by using a multi-gate mixture-of-experts module of the machine learning model.

10. The method according to claim 1, further comprising:
preliminarily obtaining the age interval of the user through division by using an XGBoost model.

11. The method according to claim 1, further comprising:
predicting at least one of the age interval and the gender of the user based on a combination of the gesture information of the user and one or more of posture information, action information, and voice information of the user.

12. The method according to claim 1, further comprising:
determining an identity authentication method for the user based on at least one of the predicted age interval and the predicted gender of the user.

13. The method according to claim 1, further comprising:
generating a recommendation for the user based on at least one of the predicted age interval and the predicted gender of the user.

14. A system for predicting an age interval or a gender of a user, comprising:
a gesture input receiving module, configured to receive a gesture input of the user on a touch panel of user equipment;
a gesture information generation module, configured to generate gesture information based on the gesture input of the user, wherein the gesture information comprises two or more of a gesture event type, a gesture location, gesture duration, average pressing pressure, an average pressing area, a gesture timestamp, and an associated service identifier; and
a prediction module, configured to predict at least one of the age interval and the gender of the user based on the gesture information by using a machine learning model.

15. The system according to claim 14, wherein the machine learning model comprises one or more of a trace module, a timing module, and a category module.

16. An apparatus for predicting an age interval or a gender of a user, comprising:
a memory; and
a processor, wherein the processor is configured to perform the method according to any one of claims 1 to 13.

17. A computer-readable storage medium storing instructions, wherein when the instructions are executed by a computer, the computer is enabled to perform the method according to any one of claims 1 to 13.
